# EUROPÄISCHE PATENTSCHRIFT

(11) **EP 0 439 696 B1**
(45) Veröffentlichungstag und Bekanntmachung des Hinweises auf die Patenterteilung: **17.03.1993**
(21) Anmeldenummer: 90121042.7
(22) Anmeldetag: 02.11.1990
(51) Int. Cl.: A23L 3/00, H05B 6/80, H05B 6/72

(54) **Vorrichtung zum Pasteurisieren, Sterilisieren und gleichmässigen und schnellen Erwärmen von Lebensmittelprodukten**
Apparatus for pasteurization, sterilization and homogeneous and rapid heating of food-products
Appareil pour pasteuriser, stériliser et chauffer régulièrement et rapidement des produits alimentaires

(30) Priorität: 18.01.1990 DE 4001318
(43) Veröffentlichungstag der Anmeldung: 07.08.1991
(73) Patentinhaber: HERMANN BERSTORFF Maschinenbau GmbH, D-30627 Hannover (Kleefeld) (DE)
(72) Erfinder: Koch, Klaus, Dipl.-Phys., W-3014 Laatzen 4 (DE)

(56) Entgegenhaltungen:
- EP-A- 0 128 397
- EP-A- 0 269 073
- CH-A- 522 998
- DE-A- 2 627 588
- DE-A- 3 432 341
- DE-A- 3 806 816
- DE-A- 3 834 574
- FR-A- 2 489 646
- US-A- 3 626 136
- US-A- 3 665 491

## Beschreibung

Die Erfindung betrifft eine Vorrichtung mit den Merkmalen gemäß dem Oberbegriff des Patentanspruchs 1.

Aus der DE-PS 34 32 341 ist eine Vorrichtung zum Pasteurisieren mittels Mikrowellen bekannt. Sie weist eine längliche Mikrowellenbehandlungskammer mit einem durch die Kammer geführten, endlosen Transportband auf. In die Behandlungskammer sind Mikrowelleneinspeisekanäle geführt und Temperaturfühler angeordnet.

Mittels dieser Einrichtung wird in drei aufeinander folgenden Kammern jeweils eine stufenweise Verringerung der einzuspeisenden Mikrowellenenergie vorgenommen. Wenn das zu behandlende Produkt, z.B. ein Fertiggericht, einem Pasteurisierungsvorgang unterworfen werden soll, ist es von großer Bedeutung, eine gleichmäßige Temperatur für alle in der Verpackung sich befindenden Produkte zu erzielen. Es ist sehr schwierig, diese Forderung zu erfüllen, weil die einzelnen Produkte, z.B. unterschiedliche pharmazeutische oder auch Lebensmittelprodukte, für die Erreichung einer gleichmäßigen Temperatur einen unterschiedlichen Wärmebedarf haben.

Bei Verfahren gemäß dem Stand der Technik wurde die Temperatur des Produktes als Maßstab genommen, welches zuerst die Behandlungstemperatur, z.B. die Pasteurisierungstemperatur, erreicht hatte. Die obere Behandlungstemperatur war die höchste, kritische Temperatur, die nicht überschritten werden durfte, um Temperaturschädigungen zu vermeiden. Die übrigen auch in der Verpackung enthaltenen Produkte, z.B. in einer Soße befindliche Fleischportion, erreichten dadurch überhaupt nicht die Pasteurisierungstemperatur, weil eine weitere Erhöhung der Gesamttemperatur, die für die Pasteurisierung der Fleisch-Soße-Komponente erforderlich gewesen wäre, zwangsläufig zu einer Schädigung der übrigen Produkte geführt hätte.

Aus der DE-Patentanmeldung P 38 34 574.9-45 ist zudem eine gattungsgemäße Vorrichtung bekannt, bei der jeweils unmittelbar vor jedem von unten oder oben senkrecht in die Behandlungskammer ragenden Einspeisekanal eines Mikrowellenstrahlers die Temperatur der einzelnen Teilprodukte in den Behältern messende Temperatursensoren angeordnet sind. Ein Rechner wertet die ermittelten Temperaturen in Verbindung mit abgespeicherten, produktspezifischen Kennwerten aus und steuert in Abhängigkeit von dem jeweiligen Bewertungsergebnis die Teilleistungsabgabe der Mikrowellenstrahler.

Auch aus der DE-PS 38 06 816 ist eine Vorrichtung zur Pasteurisierung oder Sterilisierung von Lebensmitteln mit Hilfe von Mikrowellen bekannt. Die dort verwendeten Mikrowellenstrahler bestehen aus Mikrowellengeneratoren, an die den jeweiligen Mikrowellenstrahl begrenzende Mikrowelleneinspeisekanäle angeschlossen sind. Die Austrittsquerschnittsfläche der Mikrowelleneinspeisekanäle sind dabei so gestaltet, daß sie geometrisch in etwa der Projektionsgeometrie der zu behandelnden Produkte in Richtung Transportband entsprechen.

Aus der EP-PS 0 128 397 ist schließlich ein kapazitiver Hochfrequenzdurchlaufofen bekannt, in dem Güter geringer Dicke aber relativ großer Länge (z.B. Textilbahnen) besonders vorteilhaft erwärmt werden können. Der Durchlaufofen verfügt über einen Hochfrequenzgenerator, der höhenverstellbare Platten-oder Stangenelektroden zur Erzeugung von elektromagnetischen wellen im Bereich von z.B. 30 MHz veranlaßt. Zudem ist eine geerdete Gegenelektrode vorgesehen, die aus einem Rost von geerdeten und senkrecht zur Durchlaufrichtung angeordneten Streufeldelektroden besteht.

Bei den Vorrichtungen gemäß dem Stand der Technik, die sich der Ultrahochfrequenztechik (Mikrowellentechnik) bedienen, ist es allein schon aus Kostengründen nachteilig, daß an jeder Bestrahlungsposition ein Mikrowellensender vorgesehen werden muß. Zudem läßt sich die Mikrowellenstrahlungskeule in der Regel nur durch Abblenden der Bereiche, die nicht bestrahlt werden sollen, auf die Produkt-Projektionsgeometrie einstellen.

Die bekannte Vorrichtung zur Erwärmung von Produkten mittels einer Hochfrequenzstrahlungsquelle ist zwar von der Sendertechnologie einfacher und kostengünstiger, aber wegen der Erzeugung eines im wesentlichen rechteckigen, ebenen Strahlungsfeldquerschnitts nicht für die differenzierte, der Geometrie und den Teilproduktmaterialkonstanten angepaßten Bestrahlung geeignet.

Es ist die Aufgabe der Erfindung, eine Vorrichtung vorzustellen, die eine kostengünstigere, gleichmäßigere und an die Teilprodukte besser anpaßbare Erwärmung, Pasteurisierung oder Sterilisierung als nach dem Stand der Technik ermöglicht.

Die Aufgabe wird durch die im kennzeichnenden Teil des Anspruchs 1 beschriebenen Merkmale gelöst. Vorteilhafte Ausgestaltungen und Weiterbildungen der Erfindung sind in den Unteransprüchen offenbart.

Durch die Verwendung der Radiofrequenztechnik in Verbindung mit dem Einsatz und der besonderen Gestaltung der Formelektroden zur Behandlung von Lebensmitteln, insbesondere in Behältern, wird eine kostengünstige Alternative zu der bisherigen Verwendung von Mikrowellenanlagen geschaffen. So kann ein Radiofrequenzgenerator beispielsweise 12 Formelektroden einer Radiofrequenzbehandlungskammer speisen, während in einer Mikrowellenbehandlungskammer an jeder Bestrahlungsposition ein Mikrowellengenerator vorgesehen werden muß.

Außerdem läßt sich durch die geometrische Gestaltung der Formelektroden ein homogenes, der Geometrie der Produkte, der Produktbehälter und/oder ihrer Teilproduktbefüllung angepaßtes Bestrahlungsfeld erzeugen, bei dem die in das Produkt einbringbare Bestrahlungsleistungsdichte vom Abstand der Elektrodenoberfläche zur Produktoberfläche abhängt.

Nachfolgend werden bevorzugte Ausführungsbeispiele der Erfindung anhand der Zeichnungen erläutert.

Es zeigen:
Fig. 1 einen schematisierten Längsschnitt durch eine Radiofrequenzbestrahlungsanlage.
Fig. 2 einen schematischen Querschnitt AA durch die Anlage gemäß Fig. 1.
Fig. 3 eine Darstellung der Energieeinspeisung mittels einer Formelektrode in einen verschiedene Teilprodukte beinhaltenden Behälter.
Fig. 4 eine Formelektrode mit Höhenverstellvorrichtung über einem verschiedene Teilprodukte beinhaltenden Produktbehälter.
Fig. 5a, Fig. 5b eine Seiten- und Draufsicht auf eine ohne Behälter bestranlte Wurst.

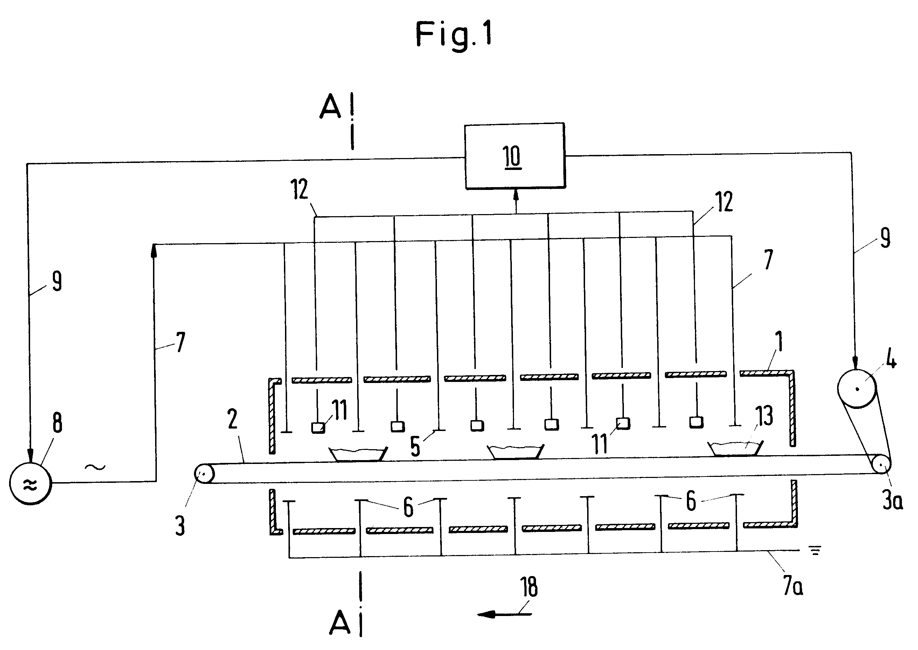

Durch die in Figur 1 dargestellte Behandlungskammer 1 wird ein endloses Transportband 2 geführt und um die Rollen 3, 3a umgelenkt. An der Umlenkrolle 3a ist ein Antrieb 4 angeschlossen. Das Transportband 2 fördert Produktbehälter 13 in Richtung des Pfeiles 18.

In der Behandlungskammer 1 sind über dem Transportband 2 Formelektroden 5 angeordnet, denen unterhalb des Transportbandes 2 geerdete Gegenelektroden 6 gegenüberstehen. Die Elektroden 5, 6 sind in Förderrrichtung hintereinander derart angebracht, daß jede Elektrodenposition einen Produktbestrahlungsort definiert. Den Formelektroden vor- und nachgeordnet sind Temperatursensoren 11, die dazu dienen, die Produkt- bzw. Teilprodukttemperatur am Bestranlungsort zu bestimmen und an einen Rechner 10 über eine Datenleitung 12 weiterzuleiten. Der Rechner 10 dient zur Verknüpfung der ermittelten Temperatur mit den produktspezifischen Materialkonstanten und steuert über die Steuerleitung 9 den taktweisen Antrieb des Transportbandes 2 über den Antrieb 4 und die Leistungsabgabe des Hochfrequenzgenerators 8 im Frequenzbereich von 13 - 440 MHZ. Zudem ist er zwecks Steuerung des Abstandes der Formelektroden 5 über dem Produkt mit Elektrodenstellvorrichtungen 17, 19 über die Steuerleitungen 9 verbunden.

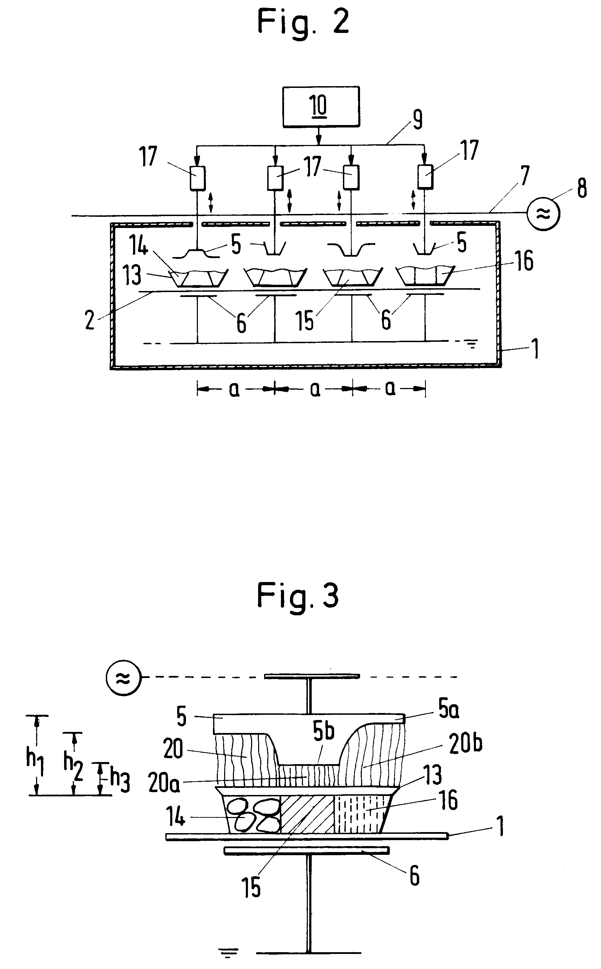

Figur 2 zeigt einen schematischen Schnitt durch die Behandlungskammer 1 quer zur Produktionsrichtung an der Stelle AA gemäß Fig. 1. Auf dem Transportband 2 sind vier Produktbehälter 13 dargestellt, die jeweils unterschiedliche Teilprodukte 14, 15, 16 enthalten. In jedem der Behälter 13 befindet sich in diesem Ausführungsbeipiel ein anderes Fertiggericht, das aufgrund seiner individuellen Zusammensetzung und gegebenenfalls Plazierung der Teilprodukte zur optimalen Wärmebehandlung eines individuellen Bestrahlungsfeldes bedarf. Dieses wird mit Hilfe der Formelektroden 5 und der Gegenelektroden 6 erzeugt, so daß auf einem Transportband 2 mehrere, hier vier verschiedene Produkte, optimal behandelt werden können. Durch die vorgesehene mechanische Austauschbarkeit der Elektroden 5, 6 mittels einer einfachen Schraub- oder Steckverbindung, kann das Produktionsprogramm schnell und einfach umgestellt werden. Lediglich die durch die maximalen Behälterabmessungen bestimmten Abmessungen der Formelektroden 5 und damit deren Abstand a zueinander, beschränken die Vorrichtung in ihrer Variabilität bezüglich unterschiedlicher Produktbehälter und Produkte.

In Fig. 3 wird verdeutlicht, daß beispielsweise bei einem Fertiggericht, bestehend aus Kartoffeln 14, Fleisch und Soße 15 sowie Gemüse 16, von einer entsprechend den Produktanforderungen gestalteten Formelektrode 5 nur die jeweils notwendigen Bestrahlungsleistungsdichten 20, 20a, 20b in die Teilprodukte 14, 15, 16 eingekoppelt werden. Da die von der Elektrodenoberfläche abgestrahlte Leistung mit dem Quadrat der Entfernung zur Produktoberfläche abnimmt, ist die Formelektrode 5 so geformt, daß sie abweichend von der Form einer Plattenelektrode Elektrodenerhebungen bzw. -vertiefungen 5a, 5b in Richtung Produktoberfläche aufweist, deren Abstand h von der Produktoberfläche von der notwendigen und teilproduktabhängigen Bestrahlungsleistungsdichte bestimmt ist. Zudem entspricht die Formelektrode 5 bezüglich ihrer Projektionsgeometrie in Richtung Transportband 2 in etwa der Projektionsgeometrie der Teilprodukte 14, 15, 16 auf dem Transportband 2.

In einem weiteren Ausführungsbeispiel verfügt die beschriebene Vorrichtung über eine Höhenverstellvorrichtung für die Formelektroden 5, mit der die Leistungsabgabe der Elektroden an das Produkt insgesamt variiert oder individuell auf die Befüllungshöhe der Behälter eingegangen werden kann. Die Verstellvorrichtung ist manuell oder von einem Rechner 10 über Steuerleitungen 9 betätigbar und verfügt in einer vorteilhaften Ausgestaltung der Erfindung über jeweils einen Stellantrieb 17 je Formelektrode 5 (Fig. 2).

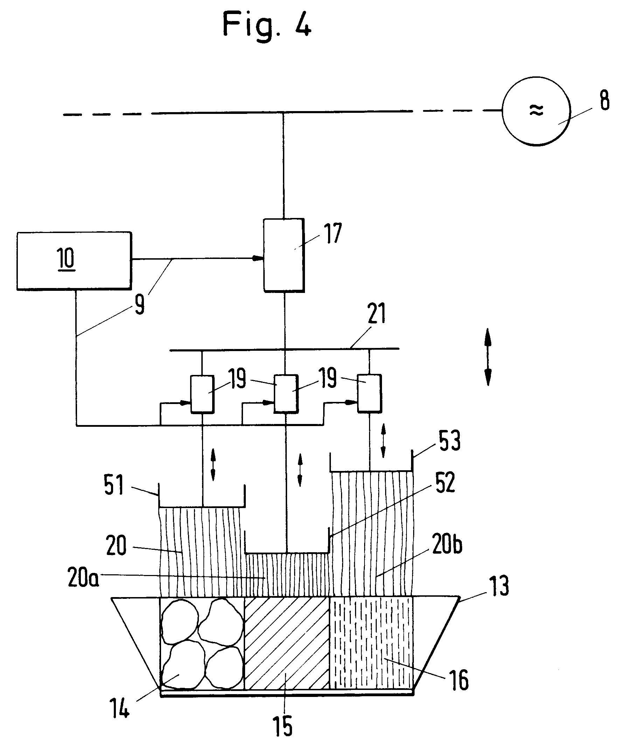

In Fig. 4 ist zudem dargestellt, wie eine Formelektrode 5 aus mehreren Einzelelektroden 51, 52, 53 gebildet sein kann. Jede der Einzelelektroden 51, 52, 53 ist dabei mit dem Rechner 10 über Steuerleitungen 9 und jeweils einem Stellantrieb 19 in seiner Höhe über dem (Teil-)Produkt verstellbar. Außerdem sind die Einzelelektroden 51, 52, 53, die mit der jeweiligen Formelektrodenbasis 21 mechanisch und elektrisch verbunden sind, über den Stellantrieb 17 gemeinsam höhenverstellbar.

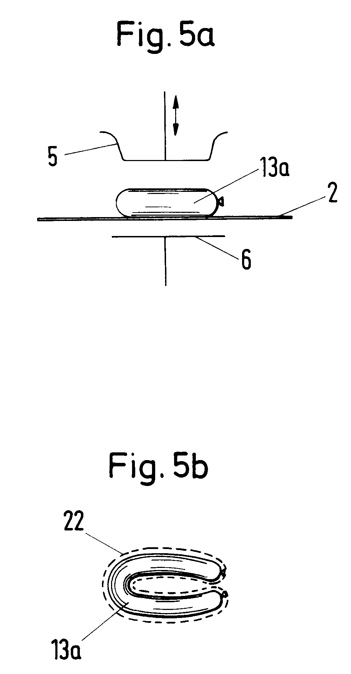

Fig. 5 zeigt ein weiteres Anwendungsbeispiel, in dem Fleisch oder eine Wurst 13a mit mehr als etwa 30 mm Dicke wärmebehandelt wird. Auch hier entspricht die Projektionsgeometrie der Formelektroden auf das Transportband in etwa der Projektionsgeometrie des Produktes auf das Transportband, so daß ein Strahlungsfeld mit dem Umriß der Linie 22 entsteht. Bei Produkten mit vergleichsweise großer Dicke macht sich die viel größere Eindringtiefe der Hochfrequenzstrahlung im Vergleich zur Ultrahochfrequenzstrahlung (Mikrowellenstrahlung) besonders vorteilhaft bemerkbar. Während man selbst bei beidseitiger Mikrowellenbestrahlung von Fleisch oder Wurst mit großer Dicke (z.B. 40 mm) im wesentlichen auf die langsamere Wärmeleitung zum Zentrum des Produkts hin angewiesen ist, ist wegen der großen Eindringtiefe der Hochfrequenzstahlung in das Produkt eine wirtschaftliche Anwendung der dielektrischen Erwärmung von solchen Lebensmitteln überhaupt erst möglich. Gleiches gilt im übrigen auch für das An- und Auftauen tiefgefrorener Lebensmittel mit Dicken größer als 40 mm.

Es ist ein besonderer Vorteil der Erfindung, daß nicht mehr, wie bei der Anwendung der Mikrowellentechnik, für jeden Bestrahlungsort ein Frequenzgenerator vorgesehen werden muß. In einer möglichen Ausgestaltung der Erfindung können aber mehrere Formelektroden 5 zu einer Bestrahlungseinheit zusammengefaßt werden, die dann von jeweils einem Hochfrequenzgenerator 8 versorgt wird.

Letztlich ist eine Variante der Erfindung denkbar, bei der auch die Gegengelektroden 6, abweichend von einer Platten-bzw. Stangenelektrodengeometrie, als Formelektroden ausgebildet sind.

### Bezugszeichenliste:

- 1: = Behandlungskammer
- 2: = Transportband
- 3: = Umlenkrolle
- 3a: = Umlenkrolle
- 4: = Antrieb
- 5: = Formelektrode
- 5a: = Elektrodenerhebung bzw. -vertiefung
- 5b: = Elektrodenerhebung bzw. -vertiefung
- 6: = Gegenelektrode
- 7: = Zuleitungen für die Elektroden
- 7a: = Zuleitungen für die Elektroden
- 8: = Hochfrequenzgenerator
- 9: = Steuerleitung
- 10: = Rechner
- 11: = Temperatursensoren
- 12: = Datenleitung
- 13: = Produktbehälter
- 13a: = Produkt
- 14: = Teilprodukt
- 15: = Teilprodukt
- 16: = Teilprodukt
- 17: = Stellantrieb einer Formelektrode
- 18: = Förderrichtung
- 19: = Stellantrieb von Einzelelektroden von Formelektroden
- 20: = Strahlungsfeld
- 20a: = Strahlungsfeld
- 20b: = Strahlungsfeld
- 21: = Formelektrodenbasis
- 22: = Projektion einer Formelektrode
- 51: = Einzelelektrode einer Formelektrode
- 52: = Einzelelektrode einer Formelektrode
- 53: = Einzelelektrode einer Formelektrode

## Patentansprüche

1. Vorrichtung zum Pasteurisieren, Sterilisieren und gleichmäßigen und schnellen Erwärmen von Lebensmittelprodukten, insbesondere in Behältern mit einem oder mehreren Teilprodukten in einem Behälter, die durch eine längliche Behandlungskammer auf einem endlosen Transportband gefördert werden und sich in offenen oder geschlossenen, aber für Hochfrequenzstrahlung durchlässigen Behältern befinden, mit von oben und unten senkrecht in die Behandlungskammer eingeführten Hochfrequenzstrahlern und diesen vor- und nachgeordneten Temperatursonden sowie einem Rechner, der mit der Fördereinrichtung und den Temperatursensoren zur Steuerung der Leistungsabgabe der Hochfrequenzgeneratoren verbunden ist,
**dadurch gekennzeichnet,**
daß zur Erwärmung der Produkte ein Radiofrequenzgenerator (8) mit Formelektroden (5) verwendet wird, wobei die Formelektroden (5) derart gestaltet sind,
daß abweichend von der Form einer Plattenelektrode Elektrodenerhebungen bzw. -vertiefungen (5a, 5b) vorgesehen sind, daß die Projektionsgeometrie der Erhebungen bzw. Vertiefungen (5a, 5b) in Richtung zum Transportband (2) in etwa der Projektionsgeometrie der Teilprodukte (14, 15, 16) des Produkts auf das Transportband (2) entsprechen, und
daß der Abstand (h) zwischen der Erhebungen bzw. Vertiefungen (5a, 5b) und der Teilproduktoberfläche bestimmt ist von der notwendigen und teilproduktabhängigen Bestrahlungsleistungsdichte.

2. Vorrichtung gemäß Anspruch 1,
**dadurch gekennzeichnet,**
daß der Radiofrequenzgenerator (8) elektromagnetische Strahlung im Bereich von 13 - 440 MHz erzeugt.

3. Vorrichtung gemäß Anspruch 1,
**dadurch gekennzeichnet,**
daß mehrere Formelektroden (5) zu einer Bestrahlungseinheit zusammenfaßbar sind.

4. Vorrichtung gemäß Anspruch 1,
**dadurch gekennzeichnet,**
daß der Abstand (h) der Formelektroden (5) zu der Produktoberfläche zur Variierung der Bestrahlungsintensität mit Hilfe von Stellvorrichtungen (17) veränderbar ist.

5. Vorrichtung gemäß Anspruch 1,
**dadurch gekennzeichnet,**
daß die Formelektroden (5) aus Einzelelektroden (51, 52, 53) bestehen, die über Stellvorrichtungen (19) mit der Formelektrodenbasis (21) verbunden und individuell in ihrem Abstand zur Produktoberfläche einstellbar sind.

6. Vorrichtung gemäß den Ansprüchen 1 und 2,
**dadurch gekennzeichnet,**
daß die Ausgangsleistung des Radiofrequenzgenerators (8) durch den Rechner (10) steuerbar ist.

7. Vorrichtung gemäß den Ansprüchen 1 bis 6,
**dadurch gekennzeichnet,**
daß ober- und unterhalb des Transportbandes (2) sich gegenüberstehende Elektroden (5,6) angeordnet sind, die als Form-, Stangen- und/oder Plattenelektroden ausgebildet und miteinander kombinierbar sind.

8. Vorrichtung gemäß den Ansprüchen 1 und 3,
**dadurch gekennzeichnet,**
daß ein Radiofrequenzgenerator (8) je Bestrahlungseinheit vorgesehen ist.

9. Vorrichtung gemäß Anspruch 1,
**dadurch gekennzeichnet,**
daß der Abstand (a) der Einzelelektroden (5, 6) zueinander abhängig ist von der Länge der zu behandlenden Produktbehälter (13).

10. Vorrichtung gemäß den Ansprüchen 1 bis 9,
**dadurch gekennzeichnet,**
daß die Elektroden (5, 6, 51, 52, 53) mittels einer Schraub- oder Steckverbindung auswechselbar sind.

## Claims

1. An apparatus for the pasteurization, sterilization, and uniform and rapid heating of food products in containers, especially with one or several individual products within one container that is open or closed, however permeable to high-frequency radiation, and that is conveyed through an oblong microwave chamber on an endless conveyor belt, with high-frequency emitters being vertically introduced into the treatment chamber from above and from below and with temperature sensors being arranged in front of and behind the emitters as well as with a computer being connected to the conveying device and the temperature sensors for controlling the power output of the high-frequency generators,
**characterized in that**
a radio-frequency generator (8) with shaped electrodes (5) is used for heating the products, with the shaped electrodes (5) being designed so that,
deviating from the form of a plate electrode, raised and recessed electrode sections (5a, 5b) are provided, that the projection geometry of the raised and/or recessed sections (5a, 5b), seen in direction of the conveyor belt (2), more or less corresponds to the projection geometry of the individual parts (14, 15, 16) of the product on the conveyor belt (2), and that the distance (h) between the raised and/or recessed sections (5a, 5b) and the individual product surface is determined by the irradiation power density that is necessary and depends on the individual product.

2. Apparatus as recited in claim 1,
**characterized in that**
the radio-frequency generator (8) generates an electromagnetic radiation in the range of 13 - 440 MHz.

3. Apparatus as recited in claim 1,
**characterized in that**
several shaped electrodes (5) can be combined to one radiation unit.

4. Apparatus as recited in claim 1,
**characterized in that**
the distance (h) between the shaped electrodes (5) and the product surface can be adjusted for varying the irradiation intensity by means of adjusting devices (17).

5. Apparatus as per claim 1,
**characterized in that**
the shaped electrodes (5) consist of individual electrodes (51, 52, 53) that are connected to the shaped electrode base (21) via the adjustment devices (19) and are separately adjustable relative to the distance from the product surface.

6. Apparatus as per claims 1 and 2,
**characterized in that**
the output of the radio-frequency generator (8) can be controlled by means of the computer (10).

7. Apparatus as per claims 1 to 6,
**characterized in that**
electrodes (5, 6) that are arranged opposite to one another above or below the conveyor belt (2) are designed as shaped, rod and/or plate electrodes and can be combined with one another.

8. Apparatus as per claims 1 + 3,
**characterized in that**
a radio-frequency generator (8) is provided for each irradiation unit.

9. Apparatus as per claim 1,
**characterized in that**
the distance (a) between the individual electrodes (5, 6) depends on the length of the product container (13) to be treated.

10. Apparatus as per claims 1 to 9,
**characterized in that**
the electrodes (5, 6, 51, 52, 53) are exchangeable by means of screw or plug connections.

## Revendications

1. Dispositif pour la pasteurisation, la stérilisation et l'échauffement rapide et homogène de produits alimentaires, surtout dans des récipients avec un ou plusieurs produits individuels dans un récipient, qui sont transportés sur une bande transporteuse sans fin à travers une chambre de traitement oblongue et qui se trouvent dans des récipients ouverts ou fermés, mais étant perméables à l'irradiation de haute fréquence, avec des radiateurs à haute fréquence introduits verticalement d'en haut et d'en bas dans la chambre de traitement, avec des capteurs de température disposés devant et derrière desdits radiateurs et avec un ordinateur étant connecté au dispositif de transport et aux capteurs de température pour le réglage de la puissance débitée par les générateurs de haute fréquence,
**caractérisé en ce que**
un générateur de radiofréquence (8) avec des électrodes de forme (5) est utilisé pour l'échauffement des produits, les électrodes de forme (5) étant conçues de sorte que,
contrairement à la conception d'une électrode à plaque, des élévations et/ou des creusements d'électrode (5a, 5b) sont prévus, que la géométrie projective des élévations et/ou des creusements (5a, 5b) en direction de la bande transporteuse (2) correspond plus ou moins à la géométrie projective des produits individuels (14, 15, 16) du produit sur la bande transporteuse (2), et
en ce que la distance (h) entre les élévations et/ou les creusements (5a, 5b) et la surface du produit individuel est définie par la puissance volumique d'irradiation nécessaire dépendant du produit individuel.

2. Dispositif selon la revendication 1,
**caractérisé en ce que**
le générateur de radiofréquence (8) génère une irradiation électro-magnétique dans la plage de 13 - 440 MHZ.

3. Dispositif selon la revendication 1,
**caractérisé en ce que**
plusieurs électrodes de formes (5) peuvent être groupées à une unité d'irradition.

4. Dispositif selon la revendication 1,
**caractérisé en ce que**
la distance (n) des électrodes de forme (5) par rapport à la surface du produit peut être modifiée à l'aide de dispositifs de réglage (17) afin de varier l'intensité d'irradiation.

5. Dispositif selon la revendication 1,
**caractérisé en ce que**
les électrodes de forme (5) sont composées d'électrodes individuelles (51, 52, 53), qui sont connectées à la base de l'électrode de forme (21) par l'intermédiaire de dispositifs de réglage (19) et peuvent être réglées individuellement dans leur distance par rapport à la surface de produit.

6. Dispositif selon les revendications 1 et 2,
**caractérisé en ce que**
la puissance débitée du générateur de radiofréquence (8) peut être commandée par l'ordinateur (10).

7. Dispositif selon les revendications 1 à 6,
**caractérisé en ce que**
des électrodes opposées (5, 6), étant conçues en tant qu'électrodes de forme, à tige et/ou à plaque et pouvant être combinées entr'elles, sont disposées au-dessus et au-dessous de la bande transporteuse (2).

8. Dispositif selon les revendications 1 et 3,
**caractérisé en ce que**
un générateur de radiofréquence (8) est prévu pour chaque unité d'irradiation.

9. Dispositif selon la revendication 1,
**caractérisé en ce que**
la distance (a) des électrodes individuelles (5, 6) entre'elles est en fonction de la longueur des récipients de produit à traiter (13).

10. Dispositif selon les revendications 1 à 9,
**caractérisé en ce que**
les électrodes (5, 6, 51, 52, 53) sont échangeables par l'intermédiaire d'un raccord par boulons ou par connecteurs.
